# EUROPEAN PATENT SPECIFICATION

(11) **EP 2 039 914 B1**
(45) Date of publication and mention of the grant of the patent: **11.07.2012**
(21) Application number: 08253041.1
(22) Date of filing: 16.09.2008
(51) Int. Cl.: F02D 19/08, F02D 9/10, F02D 41/06, F02M 23/10

(54) **Control device for internal combustion engine**
Steuervorrichtung eines Verbrennungsmotors
Dispositif de contrôle pour moteur à combustion interne

(30) Priority: 18.09.2007 JP 2007241202
(43) Date of publication of application: 25.03.2009
(73) Proprietor: Yamaha Hatsudoki Kabushiki Kaisha, Shizuoka-ken Shizuoka 438-8501 (JP)
(72) Inventor: Nakamura, Michihisa, Shizuoka-ken, 438-8501 (JP); Takahashi, Michiyasu, Shizuoka-ken, 438-8501 (JP)
(74) Representative: Moreland, David

(56) References cited:
- JP-B2- 62 054 987
- US-A- 4 706 629
- US-A- 5 301 648

## Description

### FIELD OF THE INVENTION

The present invention relates to a control device for an internal combustion engine and a straddle type vehicle provided with the same.

### BACKGROUND TO THE INVENTION

Internal combustion engines are known which are capable of using a mixed fuel formed by mixing gasoline and alcohol. Such a kind of internal combustion engine suffers a problem in that an increase in mixing ratio of alcohol in the mixed fuel causes deterioration in warming-up performance of the internal combustion engine.

JP-B-62-54987 discloses a fuel supply device for the purpose of improving a warming-up performance of the internal combustion engine. In JP-B-62-54987 describes control for an engine comprising an alcohol concentration sensor, a choke valve and a carburetor including a complete explosion correcting mechanism for opening the choke valve by a fixed opening after complete explosion (namely, after first explosion). The control functions to enrich an air fuel ratio (in other words, to lower an air fuel ratio) by reducing the opening of the choke valve in the case that the alcohol concentration is equal to or more than a predetermined value after complete explosion in a fuel supply device of the engine.

The control described in JP-B-62-54987 is provided after first explosion for the purpose of improving a so-called warming-up performance. In an internal combustion engine capable of using mixed fuel, however, the mixed fuel decreases in volatility in the case that a mixing ratio of alcohol is high. This causes difficulty in achieving excellent first explosion in some cases. That is to say, there is a problem that startability of an internal combustion engine is deteriorated.

US 5 301 648 describes an engine that is provided with an air intake passage having a throttle valve. A bypass passage is located before and after the throttle valve and a bypass control valve is disposed at the bypass passage. The engine also has a control device, which comprises a fuel properties sensor and control means for correcting a fuel amount or air amount fed to the engine based on the fuel properties sensor output. The fuel properties sensor uses a refractive index measurement to distinguish between regular gasoline and alcohol blend. The vehicle is started by turning a starting switch. When the vehicle is switched off, i.e. before the starting switch is turned, no fuel or air is supplied to the engine. Upon switching the starting switch on, the controller increases the fuel amount and the air amount to constant values determined in accordance with the engine temperature and corrected according to the fuel properties detected by the fuel properties sensor, so that when a gasoline/alcohol blend is detected, the fuel and air amounts at starting are increased compared with regular gasoline.

In view of the above, an object of the invention is to improve startability of an internal combustion engine capable of using a mixed fuel formed by mixing gasoline and alcohol.

### SUMMARY OF THE INVENTION

The aspects of the present invention are defined by the independent claims. Some preferred features are defined by the dependent claims.

Described herein is a control device for an internal combustion engine including an intake passage having a main flow channel and a bypass flow channel, and a fuel injection valve capable of injecting a mixed fuel formed by mixing gasoline and alcohol, the control device comprising:
mixing ratio determining means for detecting or estimating a mixing ratio of alcohol of a fuel;
bypass quantity varying means for varying a bypass quantity as a quantity of air flowing in the bypass flow channel; and
bypass control means for controlling the bypass quantity varying means so that the bypass quantity before first explosion is less than the bypass quantity after first explosion in the case that the mixing ratio of alcohol is a predetermined value or more.

The control device further comprises storing means for storing the mixing ratio of alcohol detected or estimated by the mixing ratio determining means.

The bypass control means controls the bypass quantity varying means so that the bypass quantity before first explosion is lowered in accordance with an increase in mixing ratio of alcohol stored in the storing means.

The control device may further comprise a temperature sensor for detecting a temperature of the internal combustion engine.

The bypass control means may control the bypass quantity varying means so that the bypass quantity before first explosion is lowered in accordance with a decrease in temperature of the internal combustion engine.

The bypass control means may control the bypass quantity varying means so that the bypass quantity after first explosion increases in accordance with a decrease in temperature of the internal combustion engine.

The bypass control means may control the bypass quantity varying means so that the bypass quantity increases after first explosion by an increasing quantity equal to or less than a predetermined quantity.

The control device may further comprise injection control means for controlling the fuel injection valve so that a fuel injection quantity before first explosion is equal to or more than a fuel injection quantity after first explosion.

The injection control means may control the fuel injection valve so that the fuel injection quantity before first explosion increases in accordance with an increase in mixing ratio of alcohol stored in the storing means.

The injection control means may control the fuel injection valve so that the fuel injection quantity before first explosion increases in accordance with a decrease in temperature of the internal combustion engine.

The control device is adapted for use with an engine in which a throttle valve is provided in the main flow channel and the bypass flow channel is arranged to provide fluid communication between upstream and downstream sides of the throttle valve.

Also described herein is a straddle type vehicle comprising a control device as described above.

Described herein is an engine comprising a control device as described above.

Also described herein is a method of controlling an engine using the control device described above.

A control device for an internal combustion engine described herein is a control device for an internal combustion engine including an intake passage having a main flow channel provided with a throttle valve and a bypass flow channel for letting an upstream side of the throttle valve in the main flow channel and a downstream side thereof communicate with each other, and a fuel injection valve capable of injecting a mixed fuel formed by mixing gasoline and alcohol, the control device comprising: a mixing ratio determining means for detecting or estimating a mixing ratio of alcohol of a fuel; a storing means for storing the mixing ratio of alcohol detected or estimated by means of the mixing ratio determining means; a bypass quantity varying means for varying a bypass quantity as a quantity of air flowing in the bypass flow channel; and a bypass control means for controlling the bypass quantity varying means so that the bypass quantity before first explosion would be less than the bypass quantity after first explosion in the case that the mixing ratio of alcohol stored in the storing means is a predetermined value or more and the temperature of the engine at the time of starting is lower than a predetermined value.

A high mixing ratio of alcohol in a fuel causes reduction in volatility. In accordance with the control device, however, the bypass amount before first explosion is smaller than the bypass amount after the first explosion in the case that the mixing ratio of alcohol is high, so that an air fuel ratio is enriched. This allows excellent first explosion to be achieved, and thereby, startability of the internal combustion engine to be improved.

The present invention permits improvement of startability of an internal combustion engine capable of using a mixed fuel formed by mixing gasoline and alcohol.

### BRIEF DESCRIPTION OF THE DRAWINGS

These and other aspects of the present invention will now be described, by way of example only, with reference to the accompanying drawings, in which:
Fig. 1 is a side view of a motorcycle;
Fig. 2 is a structural view of an engine and a control device;
Figs. 3(a) to 3(c) are structural views of a stepper motor type bypass quantity adjusting mechanism;
Figs. 4 (a) to 4 (b) are structural views of a solenoid type bypass quantity adjusting mechanism;
Fig. 5 is a timing chart showing duty control related to a solenoid type bypass quantity adjusting mechanism;
Fig. 6 illustrates steam pressure performance of gasoline and ethanol;
Fig. 7 illustrates fuel injection quantity in control before first explosion;
Fig. 8 illustrates a change in bypass quantity in starting control in accordance with passage of time;
Fig. 9 illustrates a fuel increasing ratio in control after first explosion;
Fig. 10 illustrates a change in fuel injection quantity in starting control and regular control in accordance with passage of time; and
Fig. 11 illustrates how the engine temperature and the concentration of ethanol change the bypass quantity before and after first explosion.

### DETAILED DESCRIPTION OF THE DRAWINGS

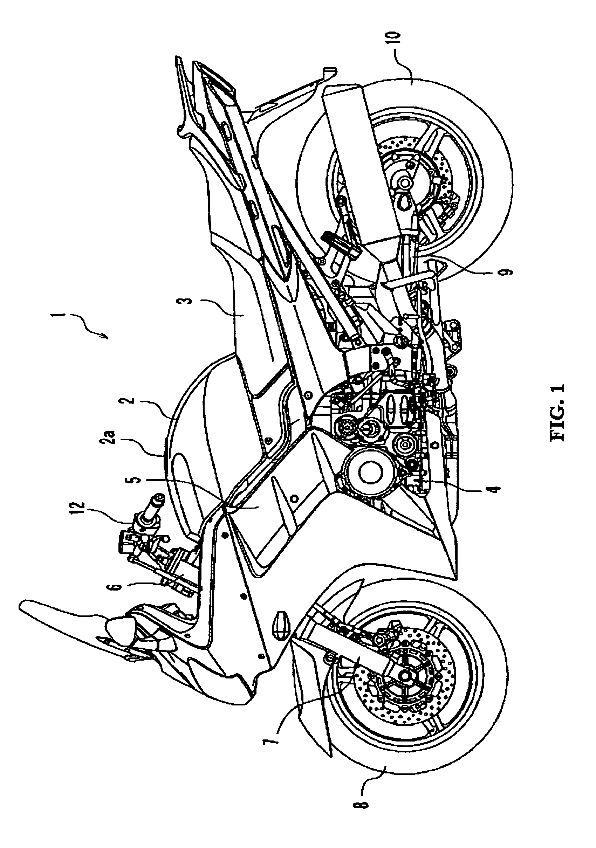

As shown in Fig. 1, a straddle type vehicle in accordance with an embodiment of the invention is a motorcycle 1. The type of the motorcycle 1 is not limited at all and may be a so-called motorcycle, a scooter, a moped, a motorbike and such. Further, the straddle type vehicle in accordance with the invention is a vehicle, which is straddled by a rider, or a vehicle equivalent to the same and may include not only a motorcycle but also an ATV (all terrain vehicle) and such.

The motorcycle 1 is capable of using gasoline, alcohol such as ethanol and a mixed fuel formed by mixing gasoline and alcohol, as a fuel. In the following description, exemplified is a case of using ethanol as an example of alcohol.

A motorcycle 1 comprises a fuel tank 2, a seat 3, an engine 4 and a body frame 5 for supporting the above components, as shown in Fig. 1. The fuel tank 2 is provided with a lid 2a. A head pipe 6 is provided on a front side of the body frame 5. A steering shaft (not shown) is mounted on the head pipe 6, a handle 12 is provided on an upper part of the steering shaft, and a front fork 7 is provided on a lower part of the steering shaft. A front wheel 8 is held on a lower end part of the front fork 7 so as to be freely rotatable. A swing arm 9 is held on the body frame 5 so as to be freely swingable. A rear wheel 10 is rotatably mounted on a rear end part of the swing arm 9.

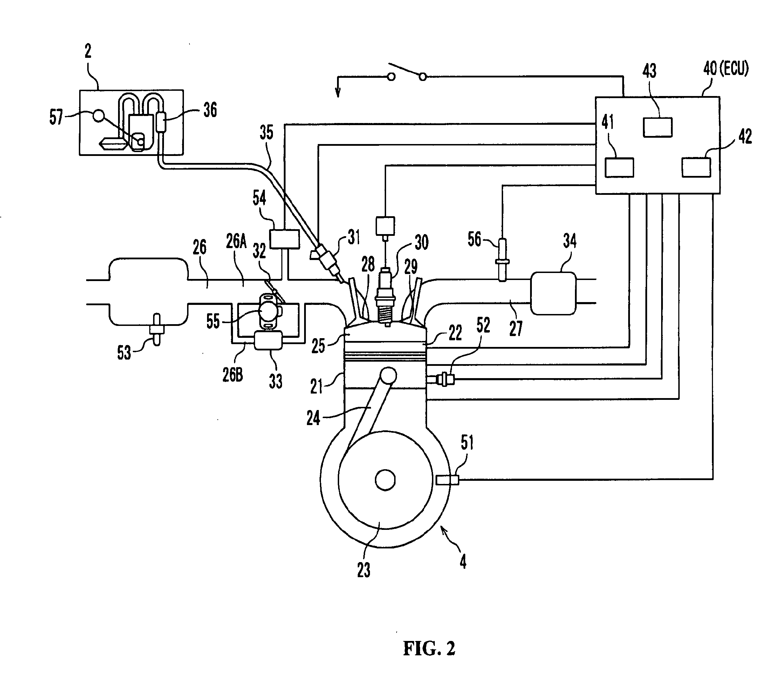

The engine 4 comprises a cylinder 21, a piston 22 reciprocating in the cylinder 21, a crank shaft 23 and a con rod 24 for connecting the piston 22 and the crank shaft 23, as shown in Fig. 2. Further, the engine 4 comprises a fuel injection valve 31 for injecting fuel and an ignition unit 30 for carrying out ignition of the fuel in a combustion chamber 25. The engine 4 is provided with a speed sensor 51 for detecting the number of rotations of the crank shaft 23 and a temperature sensor 52 for detecting the temperature of the engine 4. The temperature sensor 52 may be a sensor for detecting the temperature of a part of the engine 4 (a cylinder, for example) and may be a sensor for detecting the temperature of cooling water in the case that the engine 4 is of a water cooled type. That is to say, the temperature sensor 52 may be a sensor for directly detecting the temperature of the engine 4 as well as a sensor for indirectly detecting the temperature through the cooling water or the like.

The engine 4 includes an intake passage 26 for introducing air into the combustion chamber 25, an intake valve 28 for opening and closing a path between the intake passage 26 and the combustion chamber 25, an exhaust passage 27 for exhausting exhaust gas from the combustion chamber 25 and an exhaust valve 29 for opening and closing a path between the combustion chamber 25 and the exhaust passage 27. The fuel injection valve 31 is arranged so as to inject the fuel into the intake passage 26 in the embodiment. The fuel injection valve 31, however, may be a valve for injecting the fuel directly into the combustion chamber 25.

A temperature sensor 53 is provided in the intake passage 26 for detecting the temperature of intake air and a pressure sensor 54 for detecting intake pressure, which is the pressure inside the intake passage 26. The intake passage 26 includes a main passage 26A in which a throttle valve 32 is housed and a bypass passage 26B for permitting communication between upstream and downstream sides of the throttle valve 32 in the main passage 26. The throttle valve 32 is provided with a throttle position sensor 55 for detecting an opening of the throttle valve 32. The bypass passage 26B is provided with a bypass quantity adjusting mechanism 33 for adjusting the area of a flow channel to control the bypass quantity of the air.

The exhaust passage 27 is provided with a catalyst 34. The exhaust passage 27 is also provided with an O₂ sensor 56 for detecting oxygen present in the exhaust gas. The O₂ sensor 56 functions as an air fuel ratio sensor. The air fuel ratio sensor should be a sensor at least capable of detecting that the air fuel ratio is on a rich side or on a lean side. In accordance with the O₂ sensor 56 according to the embodiment, it can be detected that the air fuel ratio is on the rich side or the lean side. It goes without saying, however, that a sensor for linearly outputting the air fuel ratio (a linear A/F sensor), namely, a sensor for outputting the air fuel ratio per se may be used as the air fuel ratio sensor.

The fuel tank 2 and the fuel injection valve 31 are connected by means of a fuel pipe 35. A fuel pump 36 is provided in the fuel tank 2 for supplying the fuel pipe 35 with the fuel. A fuel sensor 57 is also provided in the fuel tank 2 for detecting the fuel quantity in the fuel tank 2. A specific structure of the fuel sensor 57 is not limited at all. A well-known sensor such as a liquid surface sensor, float sensor or the like may be used. In the motorcycle 1, a mixing ratio of ethanol is estimated on the basis of a value detected by means of the O₂ sensor 56. Accordingly, a sensor for detecting the concentration of ethanol in the fuel tank 2 is not provided. It is also possible, of course, to provide a sensor for detecting the concentration of ethanol of the fuel in the fuel tank 2 to directly detect the mixing ratio of ethanol.

The motorcycle 1 comprises an ECU (electronic control unit) 40 for controlling the engine 4. The ECU 40 includes an operation part 41 for executing various kinds of operation for the below-mentioned control and a storing part 42 for storing a control program for performing the control and various kinds of information. Hardware structures of the operation part 41 and the storing part 42 are not limited at all. A CPU, for example, can be used as the operation part 41 while a ROM, a RAM or the like can be used as the storing part 42. The storing part 42 includes a non-volatile memory in the embodiment. The ECU 40 also includes a mixing ratio determining part 43 for determining a mixing ratio of ethanol of a fuel. As described above, the mixing ratio of ethanol is arranged to be estimated on the basis of a value detected by means of the O₂ sensor 56 in the embodiment. The mixing ratio determining part 43 is a part for executing the estimation to determine the mixing ratio of ethanol. In the case of providing a sensor for detecting the concentration of ethanol of the fuel, the sensor is used as the mixing ratio determining part 43.

The ECU 40 is connected to the above-described sensor so that a detection signal would be sent from each sensor to the ECU 40. Specifically, the ECU 40 is connected to the speed sensor 51, the temperature sensor 52, the temperature sensor 53, the pressure sensor 54, the throttle position sensor 55, the O₂ sensor 56 and the fuel sensor 57. In the case of providing a sensor for detecting the concentration of ethanol of the fuel, the sensor is also to be connected to the ECU 40.

The structure of the bypass quantity adjusting mechanism 33 in the bypass passage 26B is not limited at all. The following mechanism may be used, for example. A specific example of the bypass quantity adjusting mechanism 33 will now be described.

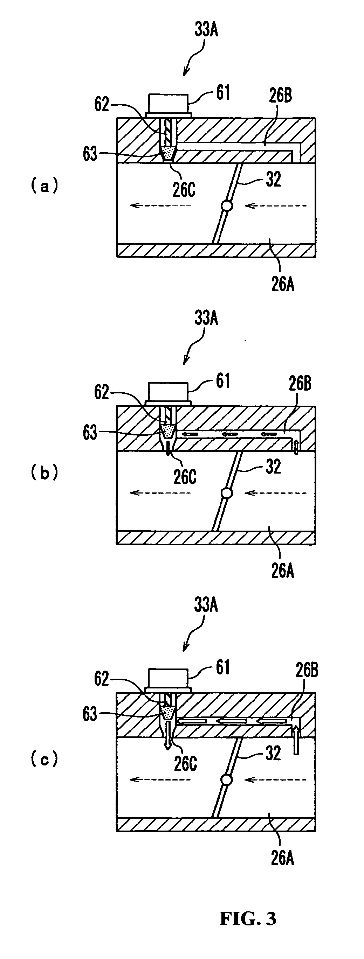

A stepper motor type bypass quantity adjusting mechanism 33A, shown in Figs. 3(a) to 3(c), may be used as the bypass quantity adjusting mechanism 33, for example. The bypass quantity adjusting mechanism 33A includes a stepper motor 61, a shaft 62 driven by the stepper motor 61 in the vertical direction (with respect to the orientation of the drawings) and a lid or valve member 63 mounted to an end of the shaft 62. In the bypass quantity adjusting mechanism 33A, the lid member 63 mounted to the end of the shaft 62 moves in the vertical direction when the shaft 62 is moved in the vertical direction by means of the stepper motor 61. This causes the lid member 63 to open and close an exit or port 26C of the bypass passage 26B and the area of a flow channel of the bypass passage 26B to be changed in accordance with the vertical position of the lid member 63. This results in adjustment of the quantity of air flowing in the bypass passage 26B. The position of the lid member 63 may be freely adjusted, so that the quantity of the air flowing in the bypass passage 26B can be freely adjusted. Fig. 3(a) illustrates a state that the lid member 63 is substantially fully closed (a substantially fully closing state). Fig. 3(b) illustrates a state that the lid member 63 is half opened (a middle opening state). Fig. 3 (c) illustrates a state that the lid member 63 is fully opened (a fully opening state).

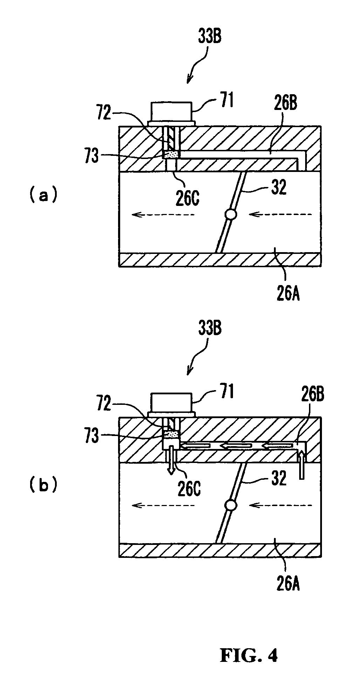

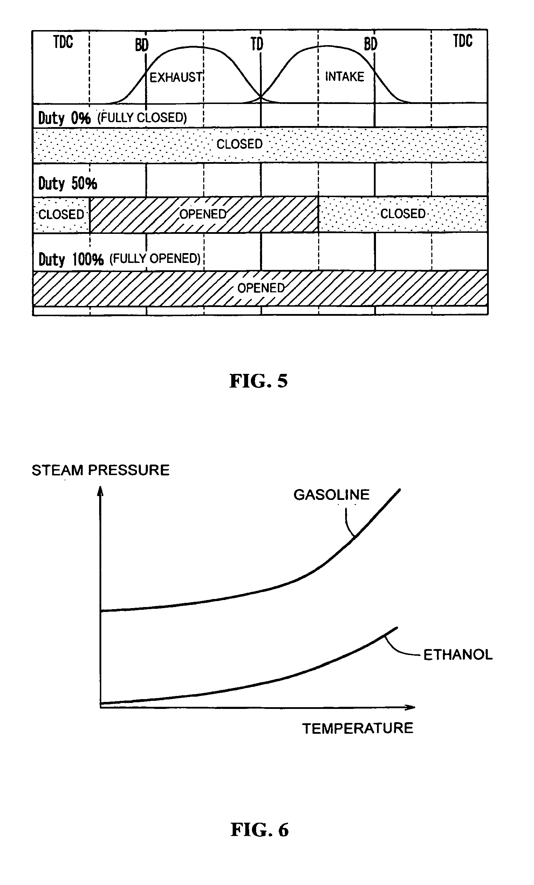

In an alternative arrangement, a solenoid type bypass quantity adjusting mechanism 33B, shown in Figs. 4(a) to 4(b), may be used as the bypass quantity adjusting mechanism 33. The bypass quantity adjusting mechanism 33B includes a solenoid 71, a shaft 72 driven by the solenoid 71 in the vertical direction (with respect to the orientation of the drawings) and a lid or valve member 73 mounted to an end of the shaft 72. In the bypass quantity adjusting mechanism 33B, the shaft 72 moves in the vertical direction in accordance with excitation of the solenoid 71. The lid member 73 is raised and the bypass passage 26B is opened when the shaft 72 is raised. Contrary to the above, a fall of the shaft 72 by means of the solenoid 71 causes the lid member 73 to fall and the bypass passage 26B to be closed. In the bypass quantity adjusting mechanism 33B, properly adjusting a ratio between the time when the lid member 73 is in a raised position and the time when the lid member 73 is in a descended position (namely, a duty ratio) allows the quantity of air flowing in the bypass passage 26B to be freely adjusted. Fig. 4 (a) illustrates a state that the bypass passage 26B is closed. Fig. 4(b) illustrates a state that the bypass passage 26B is opened. Fig. 5 is a timing chart showing an example of duty control of the bypass quantity adjusting mechanism 33B.

Engine control in accordance with the embodiment will now be described. The engine control in accordance with the embodiment includes starting control carried out before and after starting the engine 4 and regular control carried out after the starting control. The starting control will be first described, and then, the regular control will be described.

The starting control can be roughly divided into control before first explosion, which is carried out before starting the engine 4 (in other words, before the first explosion of the engine 4) after a power source of the motorcycle 1 is turned on, and control after first explosion, which is carried out after the start of the engine 4 (in other words, after the first explosion of the engine 4). The ECU 40 includes the storing part 42 in which the mixing ratio of ethanol of the fuel before turning on the power source is stored, as described above. Specifically, the storing part 42 stores the mixing ratio of ethanol at the time when the power source is turned off in the preceding time.

It is difficult in some cases to efficiently perform first explosion of the engine 4 in accordance with conditions before the first explosion. That is to say, the first explosion is difficult to be efficiently and effectively carried out more in the case that the mixing ratio of ethanol of the fuel is high than the case that the mixing ratio of ethanol is low, due to a decrease in volatility of the fuel. Ethanol is lower in steam pressure than gasoline, as show in Fig. 6. Ethanol, however, is significantly larger in latent heat of evaporation than gasoline. Accordingly, ethanol is lower in volatility than gasoline. This causes a decrease in volatility in the case of a high mixing ratio of ethanol of the fuel, so that the first explosion is difficult to be efficiently carried out. Moreover, in the case that the temperature of the engine is low, the volatility of the fuel decreases further than the case that the temperature of the engine is high. This causes difficulty in achievement of excellent first explosion. Accordingly, in the control before first explosion, the air fuel ratio is enriched to make the first explosion easily performed in the case that the volatility of the fuel decreases.

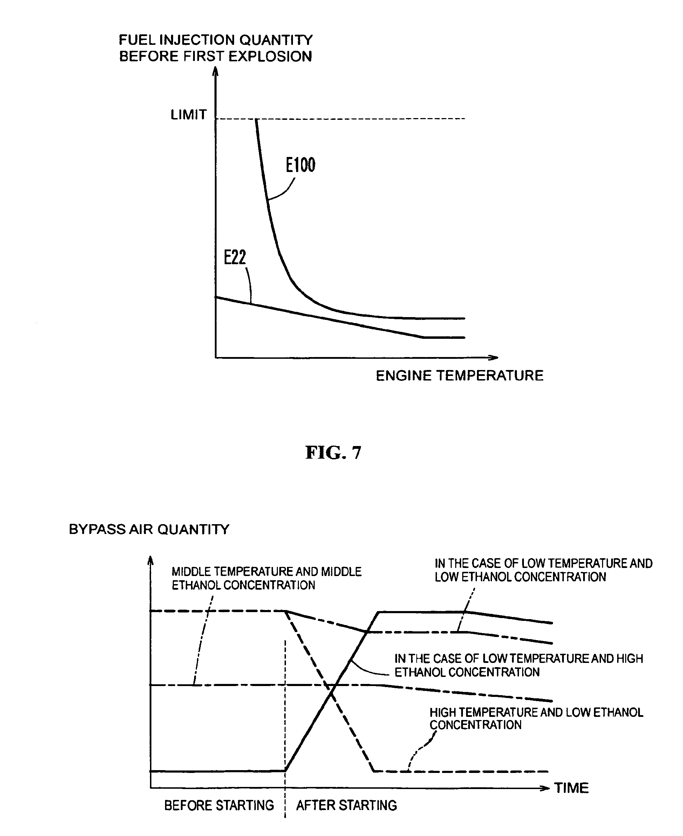

Specifically, in the control before first explosion, the fuel injection valve 31 is controlled so that the higher the mixing ratio of ethanol of the fuel would be, the more the fuel injection quantity would be, as shown in Fig. 7. E100 in Fig. 7 denotes a fuel having the mixing ratio of ethanol of 100%. E22 denotes a fuel having the mixing ratio of ethanol of 22%. Further, in the control before first explosion, the fuel injection valve 31 is controlled so that the lower the temperature of the engine would be, the more the fuel injection quantity would be. This allows the quantity of the fuel adhering to a wall surface of the intake passage 26 to be increased in accordance with an increase in mixing ratio of ethanol or a decrease in temperature of the engine, and thereby, the quantity of the fuel capable of evaporation to be increased. On the other hand, the quantity of the fuel adhering to the wall surface of the intake passage decreases when the mixing ratio of ethanol of the fuel is low or the temperature of the engine is high, so that unnecessary fuel supply can be suppressed.

Moreover, in the control before first explosion, the bypass quantity adjusting mechanism 33 is controlled so that the bypass quantity of the intake air would decrease in accordance with an increase in mixing ratio of ethanol, as shown in Fig. 8. The bypass quantity adjusting mechanism 33 may be controlled so that the bypass quantity of the intake air would decrease in accordance with a decrease in temperature of the engine. This allows the air fuel ratio to be enriched. Furthermore, narrowing the bypass passage 26B allows a flow in the intake passage 26 to strengthen, and thereby, evaporation of the fuel to be accelerated. On the other hand, the bypass quantity can be comparatively increased to suppress excessive enrichment of the air fuel ratio in the case that the mixing ratio of ethanol is low or the temperature of the engine is high.

As shown by a solid line in Fig. 8, the bypass quantity before the first explosion is preferably reduced in a state that the temperature of the engine at the time of starting is low and the mixing ratio of ethanol is high. Thus, the bypass quantity adjusting mechanism 33 is preferably controlled so that the bypass quantity before the first explosion is smaller than the bypass quantity after the first explosion when the mixing ratio of ethanol is 60% or more and the temperature of the engine at the time of starting is lower than 20°C. The solid line in Fig. 8 illustrates a case that the mixing ratio of ethanol is 60% or more and the temperature of the engine at the time of starting is 15°C.

In the embodiment, carrying out such control before first explosion allows the air fuel ratio to be enriched when the volatility of the fuel lowers, so that the first explosion can be more excellently performed. Accordingly, the startability of the engine 4 can be improved.

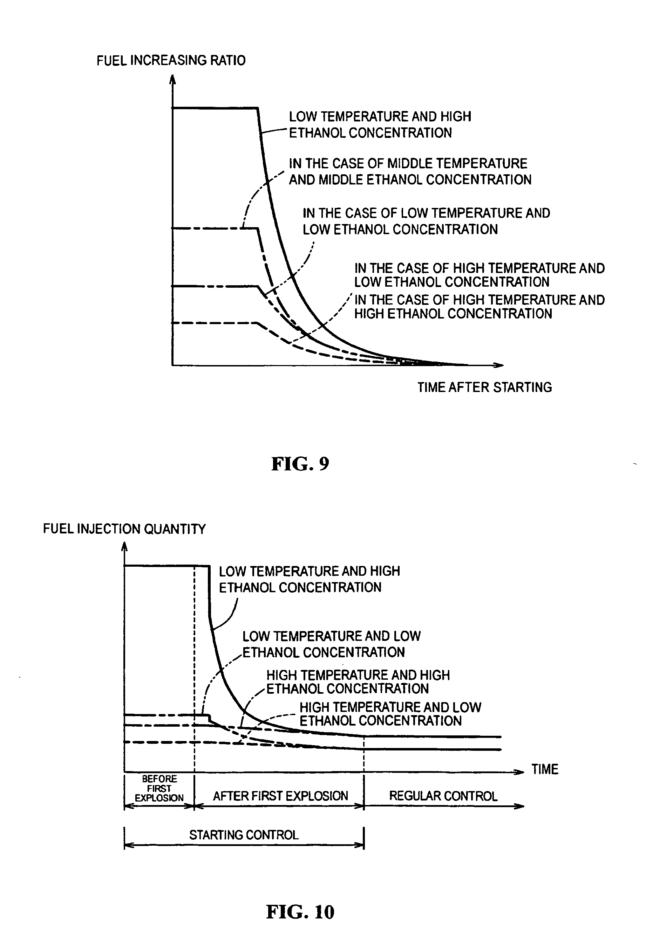

After the first explosion of the engine 4, it is preferable to immediately raise the temperature of the engine. Accordingly, the fuel injection valve 31 is controlled so that an increasing ratio (referred to as a fuel increasing ratio, hereinafter) of the fuel supply quantity would be increased in accordance with an increase in mixing ratio of ethanol in the control after first explosion, as shown in Fig. 9. Further, the fuel injection valve 31 is controlled so that the fuel increasing ratio would be increased in accordance with a decrease in temperature of the engine. This allows the quantity of the fuel adhering to the wall surface of the intake passage 26 to be increased when the mixing ratio of ethanol is high or the temperature of the engine is low, and thereby, the quantity of the fuel capable of evaporation to be increased. The quantity of attenuation in fuel supply quantity per a unit time in the case that the mixing ratio of ethanol is high should be made equal to or larger than that of the case that the mixing ratio of ethanol is low. This is for the purpose of suppressing excessive supply of the fuel after warming-up.

Moreover, in the control after first explosion, the bypass quantity adjusting mechanism 33 is controlled so that the bypass quantity of the intake air would be increased in accordance with a decrease in temperature of the engine, as shown in Fig. 8. Further, the bypass quantity adjusting mechanism 33 is controlled so that the bypass quantity of the intake air would be increased in accordance with an increase in mixing ratio of ethanol. The bypass quantity is preferably varied gradually so as not to be rapidly varied before and after the first explosion. In the embodiment, the bypass quantity is not varied step by step before and after the first explosion but gradually varied at a fixed increasing or decreasing ratio.

Carrying out such control after first explosion allows the temperature of the engine to be immediately raised in the embodiment, so that the warming-up performance can be improved.

In accordance with the embodiment, the bypass quantity before the first explosion is smaller than the bypass quantity after the first explosion when the mixing ratio of ethanol before the first explosion is high, as shown in Fig. 8. On the other hand, the bypass quantity before the first explosion is larger than the bypass quantity after the first explosion when the mixing ratio of ethanol before the first explosion is low. That is to say, in the starting control in accordance with the embodiment, the bypass quantity adjusting mechanism 33 is controlled so that the bypass quantity before the first explosion would be smaller than the bypass quantity after the first explosion when the mixing ratio of ethanol before the first explosion is equal to or more than a predetermined value. The predetermined value can be properly set in accordance with specifications of the engine 4. The predetermined value is preferably 60% or more, for example. In a non-claimed embodiment, the engine 4 can be certainly started regardless of the temperature of the engine at the time of starting the engine in this case.

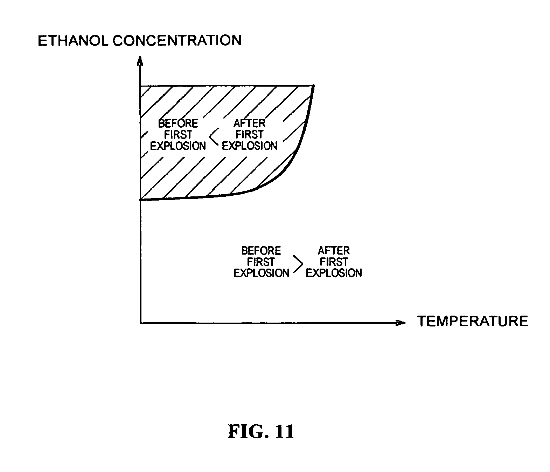

Determination whether the bypass quantity adjusting mechanism 33 is controlled or not so that the bypass quantity before first explosion would be smaller than the bypass quantity after first explosion is carried out in accordance with the temperature of the engine at the time of starting. As shown in Fig. 11, for example, the bypass quantity adjusting mechanism 33 is controlled so that the bypass quantity before first explosion would be smaller than the bypass quantity after first explosion in accordance with a decrease in temperature of the engine at the time of starting the engine and an increase in mixing ratio of ethanol.

Further, in accordance with the embodiment, the fuel injection quantity before first explosion is equal to or more than the fuel injection quantity after first explosion, as shown in Fig. 10. Specifically, the fuel injection quantity after first explosion is equal to the fuel injection quantity before first explosion just after the first explosion, and then, decreases to a value less than the fuel injection quantity before first explosion to gradually fall, as shown in Fig. 10.

The regular control is control for adjusting the injection quantity from the fuel injection valve 31 so that the air fuel ratio would be a target air fuel ratio. A specific method of the regular control is not limited at all. Various kinds of well-known control of the air fuel ratio can be used. The mixing ratio of ethanol of the fuel is estimated on the basis of a value detected by means of the O₂ sensor 56 in the embodiment. For a method of the estimation, various kinds of well-known technology can be also used. In the embodiment, air fuel ratio control is carried out in accordance with the mixing ratio of ethanol.

In the regular control, the fuel injection quantity also varies a little in accordance with a state of driving the engine 4. As show in Fig. 10, however, the fuel injection quantity varies lesser than the cases of the control before first explosion and the control after first explosion when the mixing ratio of ethanol before the first explosion is high or the temperature of the engine is low. In other words, in the case that the mixing ratio of ethanol before the first explosion is high or the temperature of the engine is low, performing the starting control in accordance with the embodiment allows the fuel injection quantity before and after first explosion to increase as well as a variation of the fuel injection quantity to increase. Accordingly, the startability of the engine 4 and the warming-up performance are improved.

In accordance with the embodiment, the bypass passage 26B is provided in the intake passage 26 and the bypass quantity adjusting mechanism 33 is controlled so that the bypass quantity of the engine 4 before first explosion would be lower than the bypass quantity after first explosion when the mixing ratio of ethanol of the fuel is equal to or more than a predetermined value, as described above. Accordingly, the volatility of the fuel lowers in the case that the mixing ratio of ethanol is high. The air fuel ratio, however, can be enriched, and thereby, the first explosion can be excellently performed. This allows the startability of the engine 4 to be improved. Further, early warming-up can be achieved after the first explosion.

Moreover, in accordance with the embodiment, control is carried out so that the bypass quantity before first explosion would decrease in accordance with an increase in mixing ratio of ethanol. Accordingly, the higher the mixing ratio of ethanol is, the more the air fuel ratio can be enriched. This allows the startability of the engine 4 to be improved even in the case that the mixing ratio of ethanol is high.

In addition, control is carried out so that the lower the temperature of the engine would be, the smaller the bypass quantity before first explosion would be, in accordance with the embodiment. Accordingly, the lower the temperature of the engine is, the more the air fuel ratio can be enriched. This allows the startability of the engine 4 to be improved even in the case that the temperature of the engine is low.

Furthermore, in accordance with the embodiment, control is carried out so that the bypass quantity after first explosion would increase in accordance with a decrease in temperature of the engine. This allows early warming-up to be achieved even when the temperature of the engine is low.

A relation between the mixing ratio of ethanol and the bypass quantity and a relation between the temperature of the engine and the bypass quantity may be or may not be linear (in other words, a linear relation). The relations may be nonlinear relations. The bypass quantity may change consecutively or stage by stage in accordance with a change in mixing ratio of ethanol or temperature of the engine. In the case of changing the bypass quantity consecutively, the stability in control is more improved than the case of changing the bypass quantity stage by stage. It may be possible to employ a setting that the bypass quantity is changed stage by stage so that the bypass quantity would significantly change at a state that the mixing ratio of ethanol is around 80% and the temperature of the engine is around 15°C.

Further, in accordance with the embodiment, control is carried out so that the bypass quantity would increase by an increasing quantity equal to or less than a predetermined quantity after the first explosion. In other words, the bypass quantity is gradually increased. This allows a rapid change in bypass quantity before and after the first explosion to be prevented, and thereby, the starting control to be smoothly carried out. Warming-up can be also smoothly performed.

Moreover, control is carried out so that the fuel injection quantity before first explosion would be equal to or more than fuel injection after first explosion, in accordance with the embodiment. Accordingly, the air fuel ratio can be enriched before the first explosion. This allows the startability of the engine 4 to be improved.

Furthermore, in accordance with the embodiment, control is carried out so that the fuel injection quantity before first explosion would increase in accordance with an increase in mixing ratio of ethanol. Accordingly, the higher the mixing ratio of ethanol is, the more the air fuel ratio can be enriched. This allows the startability of the engine 4 to be improved even in the case that the mixing ratio of ethanol is high.

In addition, control is performed so that the lower the temperature of the engine would be, the more the fuel injection quantity before first explosion would be, in accordance with the embodiment. Accordingly, the lower the temperature of the engine is, the more the air fuel ratio can be enriched. This allows the startability of the engine 4 to be improved even in the case that the temperature of the engine is low.

Ethanol is used as an example of alcohol in the embodiment. Alcohol other than ethanol (methanol and such, for example), however, may be used.

The bypass quantity may be increased after a predetermined period of time (a period of time of around one second, for example) has passed just after the first explosion although the bypass quantity is arranged to increase just after the first explosion in the embodiment shown by the solid line in Fig. 8.

In the specification, the "first explosion" means that an ignition plug of the engine 4 whose operation is suspended is ignited to carry out an explosion or combustion process for the first time and has the same meaning as "starting" of the engine 4. Operation of the engine 4 is not always continued after the "first explosion" as intended by a driver. That is to say, it goes without saying that the ignition plug is not ignited due to some cause to stop the engine 4 contrary to the intention of the driver in some cases.

The "temperature sensor for detecting the temperature of the internal combustion engine" may be a sensor for directly detecting the temperature of the internal combustion engine per se or may be a sensor for indirectly detecting the temperature of the internal combustion engine by detecting the temperature of cooling water in the case that the internal combustion engine is of a water cooling type.

The invention is useful for a control device for an internal combustion engine and a straddle type vehicle comprising the same.

### Description of the Reference Numerals and Signs

- 1:: MOTORCYCLE (STRADDLE TYPE VEHICLE)
- 4:: ENGINE (INTERNAL COMBUSTION ENGINE)
- 26:: INTAKE PASSAGE
- 26A:: MAIN PASSAGE
- 26B:: BYPASS PASSAGE
- 27:: EXHAUST PASSAGE
- 31:: FUEL INJECTION VALVE
- 32:: THROTTLE VALVE
- 33:: BYPASS AMOUNT ADJUSTING MECHANISM (BYPASS AMOUNT CHANGING MEANS)
- 40:: ECU (CONTROL DEVICE)
- 41:: OPERATION PART (BYPASS CONTROL MEANS, INJECTION CONTROL MEANS)
- 42:: STORING PART (STORING MEANS)
- 43:: MIXING RATIO DETERMINING PART (MIXING RATIO DETERMINING MEANS)
- 51:: SPEED SENSOR
- 52:: TEMPERATURE SENSOR

## Claims

1. A control device (40) for an internal combustion engine (4) capable of using at least one or a blended combination of gasoline and alcohol as fuel, and including an intake passage (26) having a main flow channel (26A) and a bypass flow channel (26B), the main flow channel comprising a throttle valve and the bypass channel being arranged to permit communication between upstream and downstream sides of the throttle valve; the control device (40) comprising:
mixing ratio determining means (43) for detecting or estimating a mixing ratio of alcohol of a fuel;
bypass quantity varying means (33) for varying a bypass quantity as a quantity of air flowing in the bypass flow channel (26B);
bypass control means (41) for controlling the bypass quantity varying means (33); and
storing means (42) for storing the mixing ratio of alcohol detected or estimated by the mixing ratio determining means (43); **characterized in that**
the bypass control means (41) controls the bypass quantity varying means (33) so that the bypass quantity before first explosion is lowered in accordance with an increase in mixing ratio of alcohol stored in the storing means (42) and so that the bypass quantity before first explosion is less than the bypass quantity after first explosion in the case that the mixing ratio of alcohol is a predetermined value or more and the temperature of the engine at the time of starting is lower than a predetermined value.

2. The control device (40) according to Claim 1, further comprising a temperature sensor (52) for detecting a temperature of the internal combustion engine (4).

3. The control device (40) according to any preceding claim, wherein the bypass control means (41) controls the bypass quantity varying means (33) so that the bypass quantity before first explosion is lowered in accordance with a decrease in temperature of the internal combustion engine (4).

4. The control device (40) according to any preceding Claim, wherein the bypass control means (41) controls the bypass quantity varying means (33) so that the bypass quantity after first explosion increases in accordance with a decrease in temperature of the internal combustion engine (4).

5. The control device (40) according to any preceding Claim, wherein the bypass control means (41) controls the bypass quantity varying means (33) so that the bypass quantity would increase after first explosion by an increasing quantity equal to or less than a predetermined quantity.

6. The control device (40) according to any preceding Claim, further comprising injection control means (41) for controlling a fuel injection valve (31) so that a fuel injection quantity before first explosion is equal to or more than a fuel injection quantity after first explosion.

7. The control device (40) according to Claim 6, wherein the injection control means (41) controls the fuel injection valve (31) so that the fuel injection quantity before first explosion increases in accordance with an increase in mixing ratio of alcohol stored in the storing means.

8. The control device (40) according to Claim 6 or 7, wherein the injection control means (41) controls the fuel injection valve (31) so that the fuel injection quantity before first explosion increases in accordance with a decrease in temperature of the internal combustion engine.

9. The control device (40) according to any preceding Claim, adapted for use with an engine (4) in which a throttle valve (32) is provided in the main flow channel (26A) and the bypass flow channel (26B) is arranged to provide fluid communication between upstream and downstream sides of the throttle valve (32).

10. The control device (40) according to any preceding Claim, adapted for use with an engine (4) which includes a fuel injection valve (31) capable of injecting a mixed fuel formed by mixing gasoline and alcohol.

11. A straddle type vehicle (1) comprising a control device (40) according to any preceding Claim.

12. An engine (4) comprising a control device (40) according to any one of claims 1 to 10.

13. A method of controlling an engine (4) capable of using at least one or a blended combination of gasoline and alcohol as fuel, and including an intake passage (26) having a main flow channel (26A) and a bypass flow channel (26B), the main flow channel comprising a throttle valve and the bypass channel being arranged to permit communication between upstream and downstream sides of the throttle valve; the method comprising:
detecting or estimating a mixing ratio of alcohol of a fuel; the method being **characterized in that** it comprises:
varying a bypass quantity as a quantity of air flowing in the bypass flow channel (26B) so that the bypass quantity before first explosion is less than the bypass quantity after first explosion in the case that the mixing ratio of alcohol is a predetermined value or more and the temperature of the engine at the time of starting is lower than a predetermined value; and
controlling the bypass quantity so that the bypass quantity before first explosion is lowered in accordance with an increase in mixing ratio of alcohol.

## Patentansprüche

1. Steuervorrichtung (40) für einen Verbrennungsmotor (4), der mindestens eines von Benzin und Alkohol oder eine gemischte Kombination davon als Kraftstoff einsetzen kann und einen Ansaugkanal (26) mit einem Hauptströmungskanal (26A) und einem Bypass-Strömungskanal (26B) umfasst, wobei der Hauptströmungskanal ein Drosselventil aufweist und der Bypass-Strömungskanal angeordnet ist, um eine Verbindung zwischen der stromaufwärts und der stromabwärts gelegenen Seite des Drosselventils zu gestatten, wobei die Steuervorrichtung (40) aufweist:
ein Mittel (43) zur Ermittlung des Mischverhältnisses für das Nachweisen oder Einschätzen eines Mischverhältnisses des Alkohols bei einem Kraftstoff;
ein Mittel (33) zur Veränderung der Umgehungsmenge für das Verändern einer Umgehungsmenge, als eine Luftmenge, die in den Bypass-Strömungskanal (26B) strömt;
ein Bypass-Steuermittel (41) für das Steuern des Mittels (33) zur Veränderung der Umgehungsmenge; und
ein Speichermittel (42) für das Speichern des Mischverhältnisses des Alkohols, das von dem Mittel (43) zur Ermittlung des Mischverhältnisses nachgewiesen oder eingeschätzt wird; **dadurch gekennzeichnet, dass**
das Bypass-Steuermittel (41) das Mittel (33) zur Veränderung der Umgehungsmenge so steuert, dass die Umgehungsmenge vor der ersten Explosion in Übereinstimmung mit einem Anstieg des Mischverhältnisses des Alkohols, das in dem Speichermittel (42) gespeichert wird, abgesenkt wird, und so dass die Umgehungsmenge vor der ersten Explosion geringer ist als die Umgehungsmenge nach der ersten Explosion in dem Fall, dass das Mischverhältnis des Alkohols ein vorgegebener Wert oder größer ist, und dass die Temperatur des Motors zum Zeitpunkt des Startens niedriger ist als ein vorgegebener Wert.

2. Steuervorrichtung (40) nach Anspruch 1, die außerdem einen Temperatursensor (52) für das Nachweisen einer Temperatur des Verbrennungsmotors (4) aufweist.

3. Steuervorrichtung (40) nach einem der vorhergehenden Ansprüche, bei der das Bypass-Steuermittel (41) das Mittel (33) zur Veränderung der Umgehungsmenge so steuert, dass die Umgehungsmenge vor der ersten Explosion in Übereinstimmung mit einer Absenkung der Temperatur des Verbrennungsmotors (4) abgesenkt wird.

4. Steuervorrichtung (40) nach einem der vorhergehenden Ansprüche, bei der das Bypass-Steuermittel (41) das Mittel (33) zur Veränderung der Umgehungsmenge so steuert, dass die Umgehungsmenge nach der ersten Explosion in Übereinstimmung mit einer Absenkung der Temperatur des Verbrennungsmotors (4) ansteigt.

5. Steuervorrichtung (40) nach einem der vorhergehenden Ansprüche, bei der das Bypass-Steuermittel (41) das Mittel (33) zur Veränderung der Umgehungsmenge so steuert, dass die Umgehungsmenge nach der ersten Explosion um eine zunehmende Menge gleich einer oder kleiner als eine vorgegebene Menge ansteigen würde.

6. Steuervorrichtung (40) nach einem der vorhergehenden Ansprüche, die außerdem ein Einspritzsteuermittel (41) für das Steuern eines Kraftstoffeinspritzventils (31) aufweist, so dass eine Kraftstoffeinspritzmenge vor der ersten Explosion gleich einer oder größer als eine Kraftstoffeinspritzmenge nach der ersten Explosion ist.

7. Steuervorrichtung (40) nach Anspruch 6, bei der das Einspritzsteuermittel (41) das Kraftstoffeinspritzventil (31) so steuert, dass die Kraftstoffeinspritzmenge vor der ersten Explosion in Übereinstimmung mit einem Anstieg des Mischverhältnisses des Alkohols, das in dem Speichermittel gespeichert wird, ansteigt.

8. Steuervorrichtung (40) nach Anspruch 6 oder 7, bei der das Einspritzsteuermittel (41) das Kraftstoffeinspritzventil (31) so steuert, dass die Kraftstoffeinspritzmenge vor der ersten Explosion in Übereinstimmung mit einer Absenkung der Temperatur des Verbrennungsmotors ansteigt.

9. Steuervorrichtung (40) nach einem der vorhergehenden Ansprüche, die für eine Verwendung bei einem Motor (4) ausgebildet ist, bei dem ein Drosselventil (32) im Hauptströmungskanal (26A) vorhanden ist und der Bypass-Strömungskanal (26B) angeordnet ist, um eine Fluidverbindung zwischen der stromaufwärts und der stromabwärts gelegenen Seite des Drosselventils (32) zu bewirken.

10. Steuervorrichtung (40) nach einem der vorhergehenden Ansprüche, die für eine Verwendung bei einem Motor (4) ausgebildet ist, der ein Kraftstoffeinspritzventil (31) umfasst, das einen gemischten Kraftstoff einspritzen kann, der durch Mischen von Benzin und Alkohol hergestellt wird.

11. Grätschsitz-Fahrzeug (1), das eine Steuervorrichtung (40) nach einem der vorhergehenden Ansprüche aufweist.

12. Motor (4), der eine Steuervorrichtung (40) nach einem der Ansprüche 1 bis 10 aufweist.

13. Verfahren zum Steuern eines Motors (4), der mindestens eines von Benzin und Alkohol oder eine gemischte Kombination davon als Kraftstoff einsetzen kann und einen Ansaugkanal (26) mit einem Hauptströmungskanal (26A) und einem Bypass-Strömungskanal (26B) umfasst, wobei der Hauptströmungskanal ein Drosselventil aufweist und der Bypass-Kanal angeordnet ist, um eine Verbindung zwischen der stromaufwärts und der stromabwärts gelegenen Seite des Drosselventils zu gestatten, wobei das Verfahren den folgenden Schritt aufweist:
Nachweisen oder Einschätzen eines Mischverhältnisses des Alkohols bei einem Kraftstoff;
wobei das Verfahren **dadurch gekennzeichnet ist, dass** es die folgenden Schritte aufweist:
Verändern einer Umgehungsmenge, als eine Luftmenge, die in den Bypass-Strömungskanal (26B) strömt, so dass die Umgehungsmenge vor der ersten Explosion geringer ist als die Umgehungsmenge nach der ersten Explosion in dem Fall, dass das Mischverhältnis des Alkohols ein vorgegebener Wert oder größer ist, und dass die Temperatur des Motors zum Zeitpunkt des Startens niedriger ist als ein vorgegebener Wert; und
Steuern der Umgehungsmenge, so dass die Umgehungsmenge vor der ersten Explosion in Übereinstimmung mit einem Anstieg des Mischverhältnisses des Alkohols abgesenkt wird.

## Revendications

1. Dispositif de commande (40) pour un moteur à combustion interne (4), capable d'utiliser au moins l'un parmi l'essence et l'alcool ou une combinaison mélangée de ceux-ci comme carburant, et englobant un passage d'admission (26), comportant un canal d'écoulement principal (26A) et un canal d'écoulement de dérivation (26B), le canal d'écoulement principal comprenant une soupape d'étranglement et le canal de dérivation étant agencé de sorte à permettre une communication entre les côtés amont et aval de la soupape d'étranglement ; le dispositif de commande (40) comprenant :
un moyen de détermination du rapport de mélange (43), pour détecter ou estimer un rapport de mélange de l'alcool d'un carburant ;
un moyen de changement de la quantité de dérivation (33), pour changer une quantité de dérivation, constituant une quantité d'air s'écoulant dans le canal d'écoulement de dérivation (26B) ;
un moyen de commande de la dérivation (41), pour contrôler le moyen de changement de la quantité de dérivation (33) ; et
un moyen de stockage (42), pour stocker le rapport de mélange de l'alcool détecté ou estimé par le moyen de détermination du rapport de mélange (43), **caractérisé en ce que**
le moyen de commande de la dérivation (41) contrôle le moyen de changement de la quantité de dérivation (33) de sorte que la quantité de dérivation avant la première explosion est réduite en fonction d'un accroissement du rapport de mélange de l'alcool stocké dans le moyen de stockage (42), la quantité de dérivation avant la première explosion étant ainsi inférieure à la quantité de dérivation après la première explosion dans le cas où le rapport de mélange de l'alcool constitue une valeur prédéterminée ou une valeur supérieure, la température du moteur lors du démarrage étant inférieure à une valeur prédéterminée.

2. Dispositif de commande (40) selon la revendication 1, comprenant en outre un capteur de la température (52) pour détecter une température du moteur à combustion interne (4).

3. Dispositif de commande (40) selon l'une quelconque des revendications précédentes, dans lequel le moyen de commande de la dérivation (41) contrôle le moyen de changement de la quantité de dérivation (33), de sorte que la quantité de dérivation avant la première explosion est réduite en fonction d'une réduction de la température du moteur à combustion interne (4).

4. Dispositif de commande (40) selon l'une quelconque des revendications précédentes, dans lequel le moyen de commande de la dérivation (41) contrôle le moyen de changement de la quantité de dérivation (33) de sorte que la quantité de dérivation après la première explosion est accrue en fonction d'une réduction de la température du moteur à combustion interne (4).

5. Dispositif de commande (40) selon l'une quelconque des revendications précédentes, dans lequel le moyen de commande de la dérivation (41) contrôle le moyen de changement de la quantité de dérivation (33) de sorte que la quantité de dérivation serait accrue après la première explosion, d'une quantité accrue, égale ou inférieure à une quantité prédéterminée.

6. Dispositif de commande (40) selon l'une quelconque des revendications précédentes, comprenant en outre un moyen de commande de l'injection (41) pour contrôler une soupape d'injection de carburant (31) de sorte qu'une quantité d'injection de carburant avant la première explosion est égale ou supérieure à une quantité d'injection de carburant après la première explosion.

7. Dispositif de commande (40) selon la revendication 6, dans lequel le moyen de commande de l'injection (41) contrôle la soupape d'injection de carburant (31) de sorte que la quantité d'injection de carburant avant la première explosion est accrue en fonction d'un accroissement du rapport de mélange de l'alcool stocké dans le moyen de stockage.

8. Dispositif de commande (40) selon les revendications 6 ou 7, dans lequel le moyen de commande de l'injection (41) contrôle la soupape d'injection de carburant (31) de sorte que la quantié d'injection de carburant avant la première explosion est accrue en fonction d'une réduction de la température du moteur à combustion interne.

9. Dispositif de commande (40) selon l'une quelconque des revendications précédentes, adapté pour être utilisé avec un moteur (4) dans lequel une soupape d'étranglement (32) est agencée dans le canal d'écoulement principal (26A), le canal d'écoulement de dérivation (26B) étant agencé de sorte à établir une communication de fluide entre les côtés amont et aval de la soupape d'étranglement (32).

10. Dispositif de commande (40) selon l'une quelconque des revendications précédentes, adapté pour être utilisé avec un moteur (4) englobant une soupape d'injection de carburant (31) capable d'injecter un carburant mélangé formé en mélangeant de l'essence et de l'alcool.

11. Véhicule du type à enfourcher (1), comprenant un dispositif de commande (40) selon l'une quelconque des revendications précédentes.

12. Moteur (4), comprenant un dispositif de commande (40) selon l'une quelconque des revendications 1 à 10.

13. Procédé de commande d'un moteur (4) capable d'utiliser au moins l'un parmi l'essence et l'alcool ou une combinaison mélangée de ceux-ci comme carburant, et englobant un passage d'admission (26) comportant un canal d'écoulement principal (26A) et un canal d'écoulement de dérivation (26B), le canal d'écoulement principal comprenant une soupape d'étranglement, et le canal de dérivation étant agencé de sorte à permettre une communication entre les côtés amont et aval de la soupape d'étranglement ; le procédé comprenant l'étape ci-dessous :
détection ou estimation d'un rapport de mélange de l'alcool d'un carburant ;
le procédé étant **caractérisé en ce qu'**il comprend les étapes ci-dessous :
changement de la quantité de dérivation, constituant une quantité d'air s'écoulant dans le canal d'écoulement de dérivation (26B), de sorte que la quantité de dérivation avant la première explosion est inférieure à la quantité de dérivation après la première explosion dans le cas où le rapport de mélange de l'alcool constitue une valeur prédéterminée ou une valeur supérieure, la température du moteur lors du démarrage étant inférieure à une valeur prédéterminée ; et
contrôle de la quantité de dérivation, de sorte que la quantité de dérivation avant la première explosion est réduite en fonction d'un accroissement du rapport de mélange de l'alcool.
